(19) Europäisches Patentamt
European Patent Office
Office européen des brevets

(11) **EP 2 846 154 A1**

(12) **EUROPEAN PATENT APPLICATION**
published in accordance with Art. 153(4) EPC

(43) Date of publication:
**11.03.2015 Bulletin 2015/11**

(51) Int Cl.:
**G01N 21/65** (2006.01)     **G01N 21/27** (2006.01)

(21) Application number: **13784785.1**

(86) International application number:
**PCT/JP2013/002851**

(22) Date of filing: **26.04.2013**

(87) International publication number:
**WO 2013/164910 (07.11.2013 Gazette 2013/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.05.2012   JP 2012104401**

(71) Applicant: **Seiko Epson Corporation Shinjuku-ku Tokyo 163-0811 (JP)**

(72) Inventors:
• **AMAKO, Jun**
  **Suwa-shi, Nagano 392-8502 (JP)**
• **NISHIDA, Hideaki**
  **Suwa-shi, Nagano 392-8502 (JP)**
• **MANO, Tetsuo**
  **Suwa-shi, Nagano 392-8502 (JP)**

(74) Representative: **Hoffmann Eitle Patent- und Rechtsanwälte PartmbB Arabellastraße 30 81925 München (DE)**

(54) **OPTICAL DEVICE AND DETECTION APPARATUS**

(57)    Provided are an optical device, a detection apparatus, etc., capable of obtaining a sufficiently large enhanced electric field without utilizing coupling between a localized surface plasmon and a propagating surface plasmon.

An optical device 10 includes a substrate 12, a metal layer 14 formed on the substrate, a dielectric layer 16 formed on the metal layer, and multiple metal nanostructures 18 formed on the dielectric layer. When the thickness of the dielectric layer is denoted by d and the polarizability of the metal nanostructures is denoted by $\alpha^*$, the following formulae are satisfied: $d > \alpha^{1/3}/2$ and $d > 40$ nm.

FIG. 1A

FIG. 1B

## Description

[Technical Field]

The present invention relates to an optical device, a detection apparatus, etc.

[Background Art]

A demand in medical diagnoses, tests for foods, etc. has increased, and the development of a small-sized and high-speed sensing technique has been demanded. A variety of types of sensors such as a sensor using an electrochemical process have been studied, and sensors utilizing surface plasmon resonance (SPR) have drawn increasing attention for the reasons that integration is possible, the cost is low, and measurement can be performed in any environment. For example, there have been known sensors which detect whether or not a substance is adsorbed, for example, whether or not an antigen is adsorbed in an antigen-antibody reaction, or the like, by using SPR occurring on a metal thin film provided on the surface of a total reflection prism.

Here, in order to realize a highly sensitive surface plasmon resonance sensor utilizing SPR, it has been demanded that the degree of enhancement of a near electric field be as large as possible (NPL 1).

Recently, aiming at highly sensitive sensing, an SPR sensor using metal nanostructures has been proposed. For example, in an SPR sensor proposed in PTL 1, metal nanostructures are periodically arranged on a metal film through a very thin dielectric layer having a thickness of 2 to 40 nm (see Fig. 1 of PTL 1). When this sensor is irradiated with a light, a localized surface plasmon (LSP) and a propagating surface plasmon (PSP) are coupled to each other, and a near electric field appearing on the surface of the metal nanostructure is greatly enhanced. When a molecule to be detected is captured in this enhanced near electric field, a strong SERS surface-enhanced Raman scattering (SERS: surface-enhanced Raman scattering) signal is generated. By acquiring this signal and spectroscopically analyzing the signal, the molecule to be detected can be identified.

[Citation List]

[Patent Literature]

[PTL 1] JP-T-2007-538264

[Non Patent Literature]

[NPL 1] J. Phys. Soc. Jpn. 52, 3853 (1983)

[Summary of Invention]

[Technical Problem]

However, the metal nanostructures disclosed in PTL 1 have a problem that the density (the number per unit area) of sites where a strong near electric field appears (referred to as "hot sites") is low. Due to this, the sensitivity as a sensor is low, and thus, it has not yet been brought to practical use as an SPR sensor. In order to increase the density of the hot sites, it is only necessary to reduce the arrangement pitch of the metal nanostructures. However, when the metal nanostructures are arranged at a reduced pitch, the coupling between a localized surface plasmon LSP and a propagating surface plasmon PSP cannot be utilized, and thus, a dilemma in which a sufficiently large enhanced electric field cannot be obtained occurs.

An object of several aspects of the invention is to provide an optical device, a detection apparatus, etc. , capable of obtaining a sufficiently large enhanced electric field without utilizing coupling between a localized surface plasmon and a propagating surface plasmon.

An object of other several aspects of the invention is to provide an optical device, a detection apparatus, etc. capable of achieving both of a large enhanced electric field and a high hot site density.

[Solution to Problem]

(1) One aspect relates to an optical device, including:

a substrate;

a metal layer formed on the substrate;

a dielectric layer formed on the metal layer; and

multiple metal nanostructures formed on the dielectric layer, wherein

when the thickness of the dielectric layer is denoted by d and the polarizability of the metal nanostructures is denoted by $\alpha$, the following formulae are satisfied: $d > \alpha^{1/3}/2$ and $d > 40$ nm.

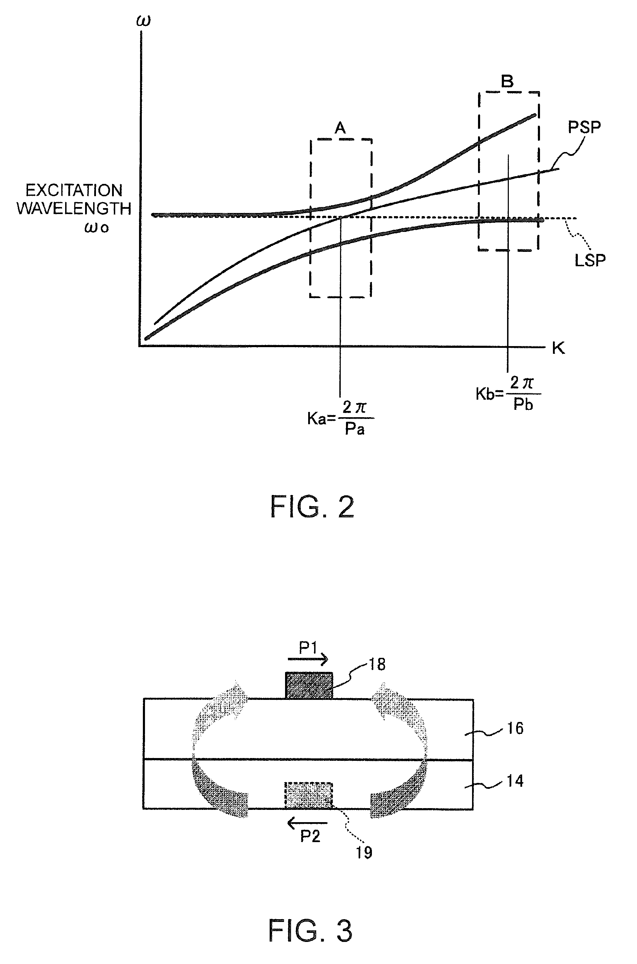

According to the aspect of the invention, by irradiation with an excitation light, a polarization is induced in the metal nanostructures, and a dipole image (virtual image) of polarization in the opposite direction acts on a metal layer (see Fig. 3). When the thickness d of the dielectric layer is made larger than the half value ($\alpha^{1/3}/2$) of the third root ($\alpha^{1/3}$) of the polarizability ($\alpha$) of the metal nanostructures, the polarization induced in the metal nanostructures is increased, and thus the electric field applied to the metal nanostructures can be enhanced. That is, a sufficiently large enhanced electric field can be obtained without utilizing coupling between a localized surface plasmon and a propagating surface plasmon. The thickness d of the dielectric layer satisfying the following formula: $d > \alpha^{1/3}/2$ is larger than 2 to 40 nm disclosed in PTL 1, and therefore, the structure can be clearly distinguished from the conventional structure.

(2) According to the aspect of the invention, the following formula may be satisfied: $d > 100$ nm. That is, a large enhanced electric field can be obtained by increasing the thickness to a value sufficiently larger than 2 to 40 nm disclosed in PTL 1.

(3) According to the aspect of the invention, when the excitation wavelength is denoted by $\lambda$, the complex permittivity of the dielectric layer is denoted by $\varepsilon 1$, and m denotes a natural number, the thickness d of the dielectric layer may be substantially equivalent to $m\lambda/2\sqrt{\varepsilon 1}$.

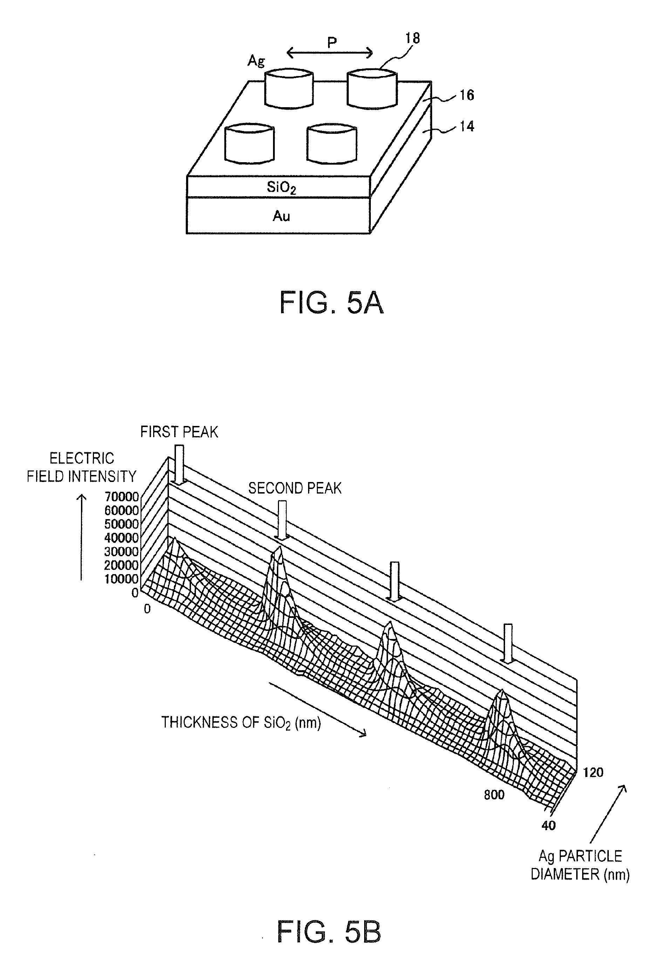

According to this, the thickness of the dielectric layer can be set so as to produce electric field peaks shown in Fig. 5(B).

(4) According to the aspect of the invention, when the pitch between adjacent metal nanostructures among the multiple metal nanostructures is denoted by P, the length of the metal nanostructure in the pitch arrangement direction is denoted by 2r, the excitation wavelength is denoted by $\lambda$, the complex permittivity of the dielectric layer is denoted by $\varepsilon 1$, and the complex permittivity of the metal layer is denoted by $\varepsilon 2$, the following formula may be satisfied: $2r < P < \lambda(\varepsilon 2 + \varepsilon 1/\varepsilon 2)^{1/2}$.

Unless the lower limit of the pitch P of the metal nanostructures is made larger than the length 2r of the metal nanostructure in the pitch arrangement direction, particles (or protrusions) bump against each other and cannot be arranged. The wavenumber Kb in a region B of a dispersion curve shown in Fig. 2 is larger than the wavenumber Ka in a region A. The wavenumber is the reciprocal of the period, and therefore, the pitch P of the metal nanostructures according to the aspect of the invention using the region B in Fig. 2 can be made smaller than the pitch $Pa = \lambda(\varepsilon 2 + \varepsilon 1/\varepsilon 2)^{1/2}$ of the metal nanostructures unambiguously determined using the region A in Fig. 2. Accordingly, both of a large enhanced electric field and a high hot site density can be achieved.

Incidentally, in the case where the length of the metal nanostructure is denoted by 2r, the radius is denoted by r if the shape in plan view of the metal nanostructure is a circle, which is a typical shape in plan view. However, the shape in plan view of the metal structure may be any. Further, if the arrangement of the metal nanostructures has periodicity, the pitch P is period, however, the arrangement may not have periodicity.

(5) According to the aspect of the invention, when a coefficient c is set as follows: $c > 1$, the following formula may be satisfied: $2r < P < \lambda(\varepsilon 2 + \varepsilon 1/\varepsilon 2)^{1/2}/c$.

When a coefficient c larger than 1 is selected, the upper limit of the pitch P in the inequality is decreased so as to make the pitch P of the metal nanostructures sufficiently smaller than the pitch Pa of the conventional structures, and therefore, the density of the hot sites can be further increased. The coefficient c may be set to, for example, 1.2 to 15. However, it is not necessary to define the upper limit of the coefficient c as long as $c > 1$. This is because if the coefficient c is set to an excessively large value, the following formula: $2r < P$ is not established, so that the inequality defined in the above item (4) is not satisfied, and therefore, the upper limit is naturally inherent in the coefficient c.

(6) According to the aspect of the invention, the following formula may be satisfied: $40$ nm $< P < 500$ nm. When considering that the pitch P of the metal nanostructures is decreased, the length 2r of the metal nanostructure in the arrangement direction is preferably set, for example, as follows: $30$ nm $< 2r < 100$ nm. In addition, when considering that the excitation wavelength $\lambda$ is as follows: $500$ nm $< \lambda < 800$ nm, the pitch P of the metal nanostructures falls within the above-described numerical range. Incidentally, the pitch Pa of the metal nanostructures using the region A in Fig. 2, which are conventional structures, is about 600 nm. When the coefficient c in the above item (5) is set to 1.2 to 15, the pitch P substantially falls within the following range: $40$ nm $< P < 500$ nm, and thus, the pitch P of the metal nanostructures is smaller than that of the conventional structures.

(7) The dielectric layer may include a first dielectric layer and a second dielectric layer, each formed from a different material. That is, the dielectric layer may be formed by laminating different materials.

(8) According to the aspect of the invention, the first dielectric layer in contact with the metal layer may be formed to have a thickness of 10 nm or less.

One of the reasons why the dielectric layer is formed to have a laminate structure is that if the dielectric layer is formed thick with a single layer, the thick dielectric layer is peeled due to heat stress. Peeling of the dielectric layer can be prevented by allowing the first dielectric layer to function as an adhesive layer or a peeling prevention layer and also by reducing the thickness of the second dielectric layer.

(9) Another aspect of the invention relates to an optical device, including:

a substrate;
a metal layer formed on the substrate;
a dielectric layer formed on the metal layer; and
multiple metal nanostructures formed on the dielectric layer, wherein
when the thickness of the dielectric layer is denoted by d, the following formula is satisfied: d > 100 nm, and
when the pitch between adjacent metal nanostructures among the multiple metal nanostructures is denoted by P, the length of the metal nanostructure in the pitch arrangement direction is denoted by 2r, the excitation wavelength is denoted by $\lambda$, the complex permittivity of the dielectric layer is denoted by $\varepsilon 1$, and the complex permittivity of the metal layer is denoted by $\varepsilon 2$, the following formula is satisfied: $2r < P < \lambda(\varepsilon 2+\varepsilon 1/\varepsilon 2)^{1/2}$.

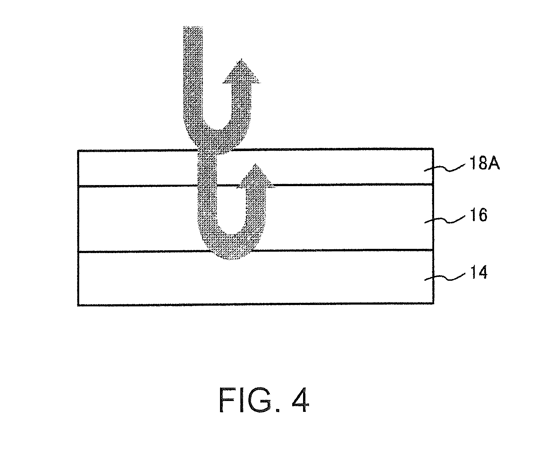

According to the another aspect of the invention, the thickness d of the dielectric layer is sufficiently larger than 2 to 40 nm disclosed in PTL 1, and therefore, the structure can be clearly distinguished from the conventional structure. Further, when the thickness d of the dielectric layer is increased, by the action of the dipole image shown in Fig. 3, or due to reflection and interference by a multilayer interference film shown in Fig. 4, an enhanced electric field can be ensured. In addition, the pitch P of the metal nanostructures according to the aspect of the invention using the region B in Fig. 2 can be made smaller than the pitch Pa = $\lambda(\varepsilon 2+\varepsilon 1/\varepsilon 2)^{1/2}$ of the metal nanostructures unambiguously determined using the region A in Fig. 2. Accordingly, both of a large enhanced electric field and a high hot site density can be achieved.

(10) Yet another aspect of the invention relates to an optical device, including:

a substrate;
a metal layer formed on the substrate;
a dielectric layer formed on the metal layer; and
multiple metal nanostructures formed on the dielectric layer, wherein
when the thickness of the dielectric layer is denoted by d, the following formula is satisfied: d > 100 nm, and when the pitch between adjacent metal nanostructures among the multiple metal nanostructures is denoted by P, the following formula is satisfied: 40 nm < P < 500 nm.

According also to the yet another aspect of the invention, the thickness d of the dielectric layer is sufficiently larger than 2 to 40 nm disclosed in PTL 1, and therefore, the structure can be clearly distinguished from the conventional structure. Further, when the thickness d of the dielectric layer is increased, by the action of the dipole image shown in Fig. 3, or due to reflection and interference by a multilayer interference film shown in Fig. 4, an enhanced electric field can be ensured. In addition, when considering that the pitch P of the metal nanostructures is decreased, the length 2r of the metal nanostructure in the arrangement direction is preferably set, for example, as follows: 30 nm < 2r < 100 nm. In addition, when considering that the excitation wavelength $\lambda$ is as follows: 500 nm < $\lambda$ < 800 nm, the pitch P of the metal nanostructures falls within the above-described numerical range. Accordingly, both of a large enhanced electric field and a high hot site density can be achieved.

(11) Still yet another aspect of the invention relates to a detection apparatus, including:

a light source;
the optical device according to any one of (1) to (10), on which a light from the light source is incident; and
a light detector which detects a light emitted from the optical device.

According to this detection apparatus, by a large enhanced electric field and/or a high hot site density, the detection sensitivity can be improved.

[Brief Description of Drawings]

[Fig. 1] Fig. 1(A) is a plan view of an optical device according to an embodiment of the invention, and Fig. 1 (B) is a sectional view thereof.

[Fig. 2] Fig. 2 is a characteristic view showing dispersion curves for the structure of the optical device shown in Figs. 1 (A) and 1(B).

[Fig. 3] Fig. 3 is a view for explaining electric field enhancement by the action of a dipole image (virtual image).

[Fig. 4] Fig. 4 is a view for explaining electric field enhancement by the action of a multilayer interference.

[Fig. 5] Fig. 5 (A) shows a specific example of an optical device, and Fig. 5(B) is a view showing the simulation result of an enhanced electric field obtained by the structure in Fig. 5(A).

[Fig. 6] Fig. 6(A) shows a specific example of the same optical device as in Fig. 5(A), and Fig. 6(B) shows an electric field intensity $E^4$ obtained by the structure thereof.

[Fig. 7] Fig. 7 (A) shows a specific example of an optical device having a metal layer different from that in Fig. 6(A), and Fig. 7(B) shows an electric field intensity $E^4$ obtained by the structure thereof.

[Fig. 8] Fig. 8 (A) shows a specific example of an optical device in which the dielectric layer is composed of two layers, and Fig. 8(B) shows an electric field intensity $E^4$ obtained by the structure thereof.

[Fig. 9] Figs. 9(A) to 9(D) are views showing a method for producing the optical device shown in Fig. 8(A).

[Fig. 10] Figs. 10(A) and 10(B) are views showing an example of a resist pattern shown in Fig 9(C).

[Fig. 11] Fig. 11 is a sectional view of an optical device, in which metal nanostructures formed on a dielectric body are formed into the shape of islands.

[Fig. 12] Fig. 12 (A) is a view showing the degree of signal enhancement obtained by the structure shown in Fig. 11 according to an embodiment of the invention, and Fig. 12(B) is a view showing the degree of signal enhancement obtained by the conventional structure.

[Fig. 13] Fig. 13 is a view showing a detection apparatus according to an embodiment of the invention.

[Description of Embodiments]

Hereinafter, embodiments of the invention will be described with reference to the drawings. Incidentally, in the respective drawings, in order to make the respective components have a recognizable size in the drawings, the sizes and ratios of the respective components are appropriately made different from those of the actual components.

1. Optical Device

1.1. Structure of Optical Device

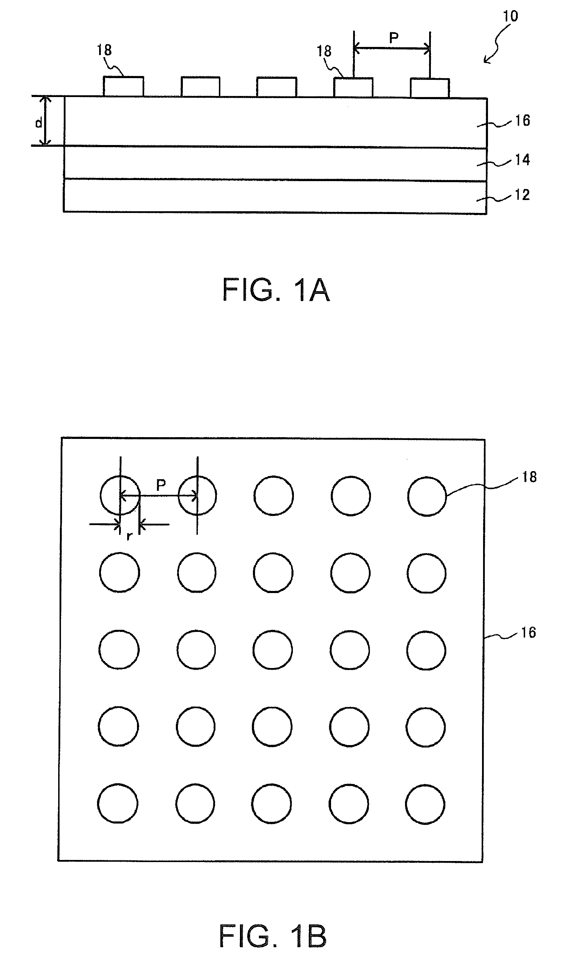

Fig. 1 schematically shows the structure of a surface plasmon resonance sensor chip (optical device) 10 of this embodiment. Fig. 1(A) is a sectional view and Fig. 1(B) is a plan view, and the both views show a partial structure.

The sensor chip 10 includes a metal layer 14 on a substrate 12, and a dielectric layer 16 having a thickness d on the metal layer 14. Metal nanostructures 18 are arranged in, for example, a two-dimensional direction at, for example, a pitch P on the metal layer 14 through the dielectric layer 16. The metal layer 14 is formed thick to such an extent that an excitation light is not transmitted through the layer.

The characteristic points of this sensor chip 10 different from the conventional technique are as follows: firstly, the thickness d of the dielectric layer 16 is sufficiently larger than 2 to 40 nm which is the conventional thickness disclosed in PTL 1; secondly, an enhanced electric field is formed by utilizing a dipole image and multilayer interference without utilizing coupling between a localized surface plasmon (LSP) and a propagating surface plasmon (PSP) ; and thirdly, the pitch P of the metal nanostructures 18 is sufficiently smaller than the period (pitch) of the conventional metal nanostructures.

Here, the first to third characteristic points are related to one another. That is, the structure of the first characteristic point or the second characteristic point becomes a factor to produce the third characteristic point as a result, and on the other hand, the third characteristic point becomes a factor to produce the structure of the third characteristic point as a result according to the principle of the second characteristic point, so that these characteristic points are related to one another. Accordingly, the invention enables multidimensional definition.

1.2. Pitch of Metal Nanostructures in Arrangement Direction

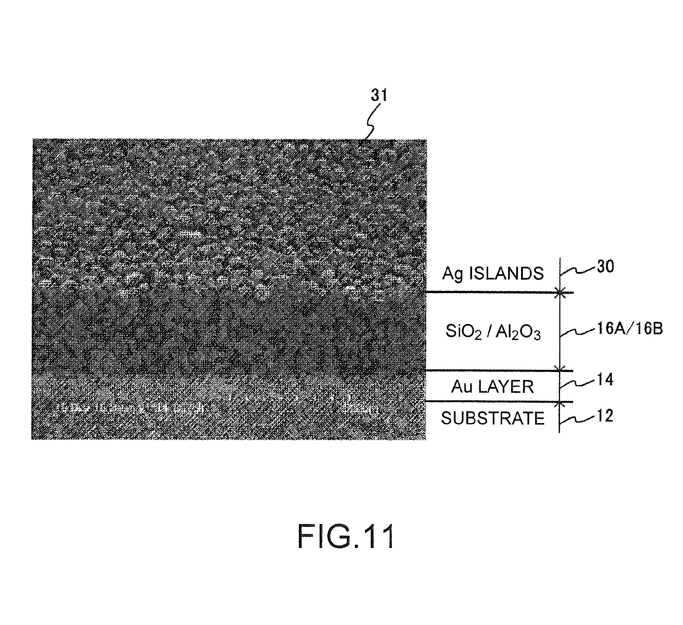

First, the third characteristic point will be described. The period (pitch) P of the metal nanostructures 18 in the arrangement direction (one-dimensional or two-dimensional direction) will be described. Incidentally, the period (pitch) P of the metal nanostructures 18 in the arrangement direction needs not be constant and may be non-periodic. In the case where the arrangement is non-periodic or random as metal nanostructures 31 in the shape of islands shown in Fig. 11 described later, it is only necessary that the maximum pitch P of the adjacent metal nanostructures satisfy the following requirements.

Fig. 2 shows dispersion curves for the structure of the optical device shown in Figs. 1(A) and 1(B), and the ordinate represents an angular frequency ω, and the abscissa represents a wavenumber k. As shown in Fig. 2, there are a dispersion curve of a localized surface plasmon LSP excited on the metal nanostructures 18 and a dispersion curve of a propagating surface plasmon PSP excited at the interface between the metal layer 14 and the dielectric layer 16.

Conventionally, attention was focused on the region A in which the dispersion curve of LSP and the dispersion curve of PSP intersect each other. By utilizing coupling occurring between LSP and PSP, a near electric field on the surface of the metal nanostructure was enhanced. In this case, an intersection point between a wavenumber $2\pi/Pa$ given by the metal nanostructures at a pitch Pa of the conventional structures and the dispersion curve of PSP corresponds to a resonance wavelength (ordinate, angular frequency: ω0), which is equivalent to the excitation wavelength λ of an incident light on the sensor chip.

That is, the wavenumber (wavenumber of an evanescent wave) Ka of a propagating surface plasmon PSP excited when the sensor chip structure is irradiated with a light with an angular frequency ω (wavelength: λ) is as follows: Ka = $2\pi/Paa$. When the pitch Pa is determined based on the relationship with the excitation wavelength λ to be used, in the case where the excitation wavelength λ is 633 nm, the pitch Pa is as large as 600 nm.

In the case of a metal nanostructure having a size in plan view, for example, a diameter of 100 nm, a hot site occurs in the vicinity of the metal nanostructure, and therefore, when the pitch Pa is 600 nm, the density of the hot sites is low. Further, the beam diameter of the excitation light is about several micrometers, and therefore, the hot sites located within the beam diameter are as few as several pitches Pa. In this manner, when a near electric field on the surface of the metal nanostructure was tried to be enhanced by utilizing coupling occurring between LSP and PSP in the conventional structure, since the pitch Pa of the metal nanostructures was increased, the density of hot sites could not be increased.

Therefore, in this embodiment, attention is focused not on the region A, but on a region B in Fig. 2. A wavenumber Kb in the region B is larger than the wavenumber Ka in the region A. The wavenumber is the reciprocal of the period, and therefore, the arrangement pitch Pb (P) of the metal nanostructures 18 according to this embodiment using the region B can be decreased.

Here, the length of the metal nanostructure 18 in the arrangement direction is denoted by 2r. If the shape in plan view of the metal nanostructure 18 is a circle, r corresponds to the radius. However, the shape in plan view of the metal nanostructure 18 may be any, and an elliptical shape or the like may be adopted as described later. Further, when λ denotes the excitation wavelength, $\varepsilon1$ denotes the complex permittivity of the dielectric layer 16, and $\varepsilon2$ denotes the complex permittivity of the metal layer 14, the following formula is satisfied: P (Pb) < Pa, and therefore, as the upper limit of the pitch P of the metal nanostructures 18 of this embodiment, the following formula is established: P < Pa = $\lambda(\varepsilon2+\varepsilon1/\varepsilon2)^{1/2}$.

The lower limit of the pitch P of the metal nanostructures 13 of this embodiment is a length, which does not bring the adjacent two metal nanostructures 18 into contact with each other in the arrangement direction. Therefore, the lower limit of the pitch P is as follows: P > 2r. As a result, as the pitch P of the metal nanostructures 18 of this embodiment, the following formula is established.

$$2r \; < \; P \; < \; \lambda(\varepsilon2+\varepsilon1/\varepsilon2)^{1/2} \qquad\qquad (1)$$

Further, in order to increase the density of hot sites by making the pitch P of the metal nanostructures 18 of this embodiment sufficiently smaller than the pitch Pa of the conventional structures, when a coefficient c is set as follows: c > 1, the following formula may be satisfied.

$$2r \; < \; P \; < \; \lambda(\varepsilon2+\varepsilon1/\varepsilon2)^{1/2}/c \qquad\qquad (2)$$

Incidentally, it is not necessary to define the upper limit of the coefficient c. This is because if the coefficient c is set to an excessively large value, the following formula: 2r < P is not established, so that the formula (2) is not satisfied, and therefore, the upper limit is naturally inherent in the coefficient c.

Further, when considering that the pitch P is decreased, the length 2r of the metal nanostructure 18 in the arrangement direction is preferably set, for example, as follows: 30 nm < 2r < 100 nm. In addition, when considering that the excitation wavelength λ is as follows: 500 nm < λ < 800 nm, the pitch P may be set as follows.

$$40 \text{ nm} < P < 500 \text{ nm} \qquad (3)$$

This numerical range is substantially the same as the range when the coefficient c in the formula (2) is set to 1.2 to 15 in the case where the pitch Pa of the conventional structures is as follows: $Pa = \lambda(\varepsilon 2 + \varepsilon 1/\varepsilon 2)^{1/2}/c$ = about 600 nm.

1.3. Thickness of Dielectric Layer

The thickness d of the dielectric layer 16 is required to be larger than 2 to 40 nm, which is the conventional thickness disclosed in PTL 1. Therefore, d can be set as follows.

$$d > 40 \text{ nm, more preferably } d > 100 \text{ nm} \qquad (4)$$

Incidentally, as described above, the thickness of the dielectric layer 16 (the first characteristic point) is correlated with the second characteristic point, and other than the case where the thickness d of the dielectric layer 16 is defined as the absolute value as represented by the formula (4), the thickness d can also be determined qualitatively by generating a large enhanced electric field without resort to coupling between LSP and PSP (the second characteristic point). Hereinafter, this point will be described.

1.4. Principle of Formation of Enhanced Electric Field without resort to Coupling between LSP and PSP

In this embodiment, the region B in Fig. 2 is used, and therefore, the pitch P of the metal nanostructures 18 is decreased as described above (the third characteristic point), and due to the causal relationship, it is necessary to generate a large enhanced electric field only with LSP without utilizing coupling occurring between LSP and PSP (the second characteristic point). Therefore, it is necessary to enhance the electric field acting on the metal nanostructures 18 so as to cause the metal nanostructures 18 to exhibit a large polarization. In this embodiment, as the origin of electric field enhancement, (1) a dipole image and (2) multilayer interference are used. Due to the causal relationship of the principles (1) and (2) to be used, the thickness d of the dielectric layer 16 is increased (the second characteristic point) as compared with the conventional technique as described below.

1.4.1. Dipole Image

As shown in Fig. 3, when a polarization induced in the metal nanostructures 18 by irradiation with an excitation light is denoted by p1, by the action of a dipole image (virtual image) of a polarization p2 in the opposite direction appearing in the metal layer 14, an electric field E1 applied to the metal nanostructures 18 is represented by the following formula when the thickness of the dielectric layer is denoted by d, the complex permittivity of the dielectric layer 16 is denoted by $\varepsilon 1$, and the complex permittivity of the metal layer 14 is denoted by $\varepsilon 2$.

$$E1 = \beta p1/(2d)^3 \qquad (5)$$

However, the coefficient $\beta$, which gives the magnitude of the dipole image, is as follows: $P = (\varepsilon 2 - \varepsilon 1) / (\varepsilon 2 + \varepsilon 1)$.
Therefore, the polarization p1 is represented by the following formula when the polarizability of the metal nanostructure 18 is denoted by $\alpha$ and the electric field of the excitation light is denoted by E2.

$$p1 = [\alpha/(1-\alpha\beta/(2d)^3)] \cdot E2 \qquad (6)$$

As found from the formula (6), the polarization p1 is increased or decreased according to the magnitude of the coefficient $1/(1-\alpha\beta/(2d)^3)$. As long as a common dielectric body or metal is used, $\varepsilon 1$ is a positive number and $\varepsilon 2$ is a negative number, and therefore, P > 1. Accordingly, in order for the above coefficient $1/(1-\alpha\beta/(2d)^3)$ to have a large positive value, since the following formula is satisfied: $\alpha/(2d)^3 < 1$, the following formula is established.

$$d > \alpha^{1/3}/2 \qquad (7)$$

It means that in order to increase the polarization p1 induced in the metal nanostructures 18 by the action of the dipole image, that is, in order to enhance the electric field E1 acting on the metal nanostructures 18, the thickness d of the dielectric layer 16 is larger than the half value ($\alpha^{1/3}/2$) of the third root ($\alpha^{1/3}$) of the polarizability $\alpha$ of the metal nanostructures 18.

Further, in order for the above coefficient $1/(1-\alpha\beta/(2d)^3)$) to have a large positive value, it is desirable that the complex permittivity of the dielectric layer 16 denoted by $\varepsilon 1$ and the complex permittivity of the metal layer 14 denoted by $\varepsilon 2$ establish the following formula. In the formula, Re[ ] represents the real part of a complex number, and Im[ ] represents the imaginary part of a complex number.

$$Re[\varepsilon 2] \geq -\varepsilon 1, \quad Im[\varepsilon 2] \approx 0 \qquad (8)$$

Examples of the material of the metal nanostructures 18 satisfying the formula (8) include Ag and Au. The polarizability $\alpha$ of Ag or Au is about 6 x $10^7$ (nm$^3$), and when this value is substituted in the formula (7), d > 200 nm. Thus, it is necessary to make the thickness d larger than 40 nm which is the thickness of the dielectric layer in the conventional technique in any case.

That is, as a structure without resort to coupling between LSP and PSP, while decreasing the pitch P of the metal nanostructures 18 (the third characteristic point), the electric field acting on the metal nanostructures 18 is increased by utilizing a dipole image (the second characteristic point), and therefore, it is necessary to make the thickness of the dielectric layer 16 larger than the conventional thickness (the first characteristic point). In other words, since the thickness of the dielectric layer 16 is made larger than the conventional thickness (the first characteristic point), the electric field acting on the metal nanostructures 18 can be increased by utilizing a dipole image without resort to coupling between LSP and PSP (the second characteristic point), and as a result, the pitch P of the metal nanostructures 18 can be decreased (the third characteristic point).

1.4.2. Multilayer Interference

The layer on which the metal nanostructures 18 are densely arranged as shown in Figs. 1(A) and 1(B) substantially acts as a thin metal layer 18A as shown in Fig. 4, and forms a pair of mirrors together with the thick metal layer 14 facing the metal layer 18A interposing the dielectric layer 16 therebetween so as to form a kind of resonance structure. A light incident on this resonance structure composed of the layers 14, 16, and 18A is repeatedly reflected between the upper and lower metal layers 14 and 18A to cause interference among many reflected waves.

Due to this, the intensity of the electric field acting on the metal nanostructures 18 depends on the reflectance of the metal layer 18A and the thickness of the dielectric layer 16. When a metal material having a high reflectance with respect to the excitation wavelength $\lambda$ is used for the metal nanostructures 18, the intensity of the electric field acting on the metal nanostructures 18 periodically and repeatedly increases and decreases with respect to the thickness d of the dielectric layer 16 (see Fig. 5(B) described below). The thickness d of the dielectric layer 16 which produces an electric field peak is approximately determined under the following condition.

$$d \approx m\lambda/2\sqrt{\varepsilon 1} \qquad (9)$$

That is, by setting the thickness d of the dielectric layer 16 to be substantially equivalent to $m\lambda/2\sqrt{\varepsilon 1}$, it is possible to produce electric field peaks shown in Fig. 5(B). In the formula, m denotes a natural number and $\lambda$ denotes an excitation wavelength.

Examples of the material of the metal nanostructures 18 having a complex permittivity $\varepsilon 2$ close to the condition of the formula (9) include Ag and Au. For example, when the excitation wavelength is set to 633 nm, the permittivity of Ag is as follows: $\varepsilon 2 = -16.1 + j1.1$, and the permittivity of Au is as follows: $\varepsilon 2 = -9.4 + j1.1$.

When the dielectric layer 16 is formed from $SiO_2$ ($\varepsilon 1 = 2.1 + j0$), the coefficient $\beta$, which gives the magnitude of the dipole image, is as follows: $\beta = 1.2$ in the case of Ag, and $\beta = 1.6$ in the case of Au. Therefore, even if either Ag or Au is used for the metal nanostructures 18, it can be expected that a large polarization p1, that is, a large near electric field appears in the metal nanostructures 18. At the same time, since Ag and Au have a high reflectance at a wavelength in the visible light range, when the thickness of $SiO_2$ which is the material of the dielectric layer 16 is determined according to the formula (9), a large electric field can be generated at the position of the metal nanostructures 18.

1.5. Correlation between Thickness of Dielectric Layer or Material of Metal Layer and Intensity of Enhanced Electric Field

Fig. 5(A) shows a specific example of the structure of a sensor chip shown in Figs. 1 (a) and 1(b). In this structure, Ag nanoparticles 18 having a cylindrical shape are arranged in a matrix in a plane at a pitch P set as follows: P = 140 nm. The diameter (2r) of this Ag nanoparticle 18 is from 40 to 110 nm and the height thereof is 20 nm.

Fig. 5 (B) shows the intensity $E^4$ of a near electric field determined by a Finite-Difference Time-Domain (FDTD) method. Incidentally, the reason why attention was focused on the intensity $E^4$ of a near electric field is as follows.

In order to realize a highly sensitive surface plasmon resonance sensor utilizing SPR, the degree of enhancement of the near electric field is desirably as large as possible. As described in NPL 1, the enhancement degree $\gamma$ can be defined as follows.

$$\gamma = (\text{enhancement degree at excitation wavelength}) \times$$

$$(\text{enhancement degree at Raman scattering wavelength})$$

$$(10)$$

As found from this formula (10), in order to increase the enhancement degree by Raman scattering, it is necessary to simultaneously increase both of the enhancement degree in the excitation process and the enhancement degree in the scattering process. Therefore, if the sensor chip has a strong resonance peak in the vicinity of the excitation wavelength and the scattering wavelength, the enhancement effect is dramatically increased by the synergistic effect of both processes. That is, $E^4$ can be used as a guide for the enhancement degree.

As found from Fig. 5 (B), there exists a particle diameter of the Ag nanoparticle which gives the maximum electric field intensity on the particle surface.

With respect to the thickness of the dielectric layer 16, as shown in Fig. 5(B), the electric field intensity has discrete peaks substantially periodically. It is apparent that the highest peak among these peaks is not the first peak appearing when the thickness of the dielectric layer is 40 nm or less, but the second peak appearing in the case where the thickness of the dielectric layer is larger than 40 nm as attention was paid in PTL 1.

In this embodiment, the intensity ($E^4$) of the second peak is about twice higher than the intensity ($E^4$) of the first peak. The reason why the electric field intensity depends on the size of the Ag nanoparticle 18 is that the particle size determines the LSP resonance wavelength range. On the other hand, the reason why the electric field intensity periodically changes with respect to the thickness of the dielectric layer 16 is that the external electric field intensity at the position of the metal nanostructure 18 is affected by the reflection and interference at the two upper and lower interfaces shown in Fig. 4.

Based on the above description, by increasing the thickness of the dielectric layer 16 as compared with the conventional technique (the first characteristic point), as its effect, the electric field acting on the metal nanostructures 18 can be enhanced without resort to coupling between LSP and PSP (the second characteristic point). By the second characteristic point, a restriction that the pitch P of the metal nanostructures 18 has to be increased is lifted, and thus, the pitch P of the metal nanostructures 18 can be decreased (the third characteristic point). As its effect, the density of hot sites can be increased.

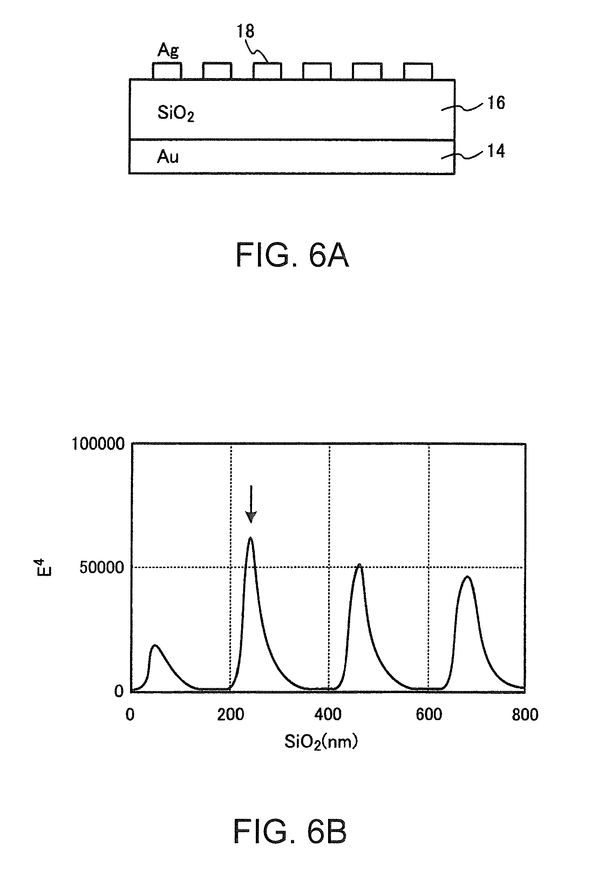

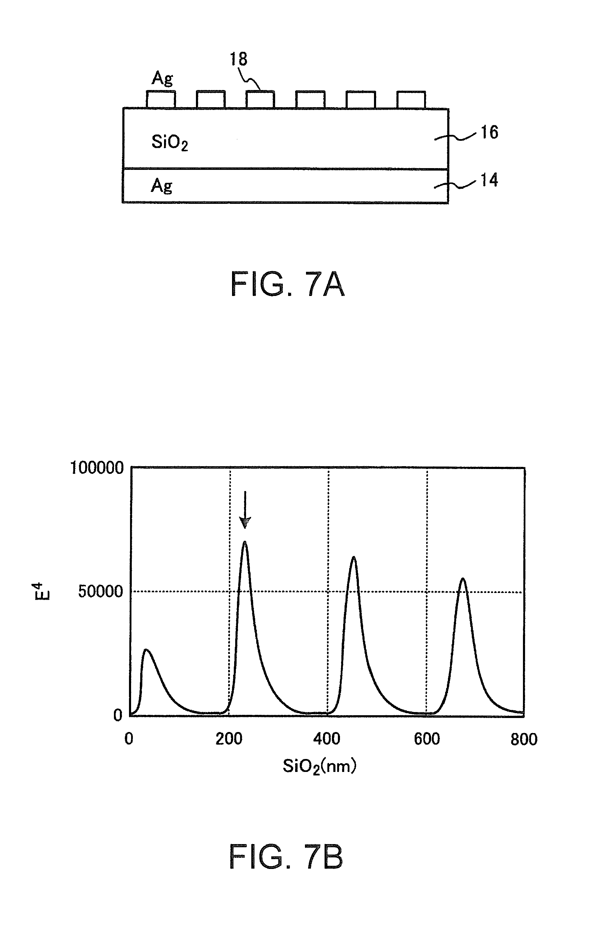

Figs. 6 (A) and 6(B) and Figs. 7 (A) and 7(B) show structures in which the material of the metal layer 14 is different, and an electric field intensity obtained by the structures. Fig. 6 (A) shows a structure using Au for the metal layer 14 in the same manner as in Fig. 5 (A), and Fig. 6 (B) shows the obtained enhanced electric field (which is the same as the result shown in Fig. 5 (B) ). Fig. 7 (A) shows a structure using Ag for the metal layer 14, and Fig. 7(B) shows the obtained enhanced electric field. When attention is focused on the second peak in Figs. 6 (B) and 7 (B), it is found that the degree of enhancement of the electric field ($E^4$) is about 1.2 times higher in the case of using Ag than in the case of using Au for the metal layer 14.

1.6. Lamination of Multiple Types of Dielectric Layers

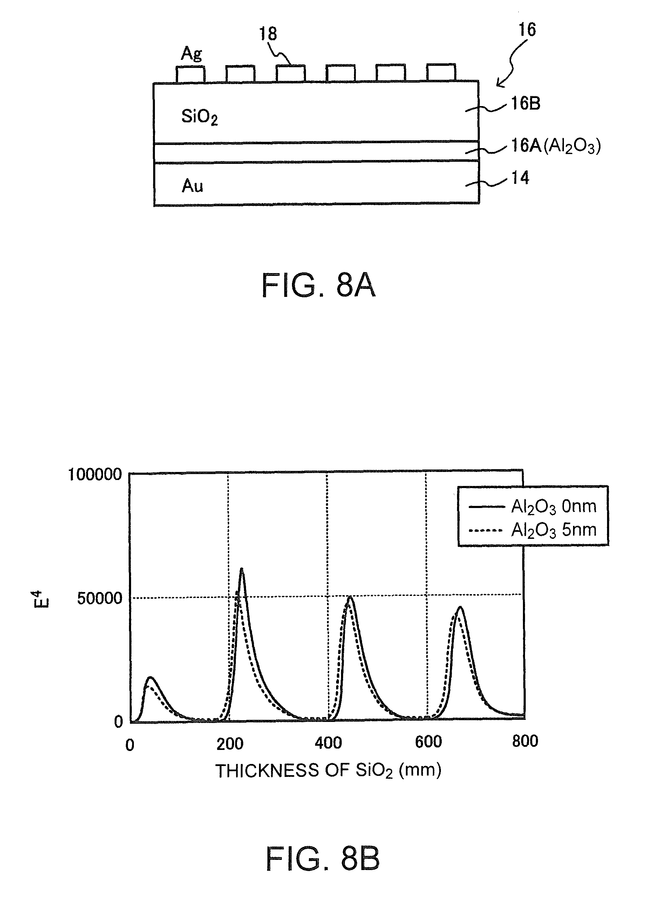

Fig. 7 shows a structure in which the dielectric layer is obtained by laminating a first dielectric layer 16A and a second dielectric layer 16B. The second dielectric layer 16B which is the outermost layer was formed from, for example, $SiO_2$, and between the metal layer (Au) 14 and the second dielectric layer 16B, the first dielectric layer 16A formed from a material different from that of the first dielectric layer 16B was formed. The first dielectric layer 16A was formed very thin ($\leq$ 5 nm) from a material, for example, $Al_2O_3$. Even in the case where the thickness of the $Al_2O_3$ layer serving as the first dielectric layer 16A is 5 nm, the thickness of the second dielectric layer ($SiO_2$) 16B which produces the electric field peaks shown in Fig. 8 (B) is decreased by about 10 nm as compared with the case where the first dielectric layer ($Al_2O_3$) 16A is not provided. Incidentally, the total thickness of the first and second dielectric layers 16A and 16B may be any as long as it satisfies the above-described requirement of the thickness d of the dielectric layer 16.

The reason why the first dielectric layer ($Al_2O_3$) 16A is provided is that when the $SiO_2$ layer is formed by sputtering or the like, peeling of the thick $SiO_2$ layer due to heat stress is prevented. That is, the first dielectric layer ($Al_2O_3$) 16A is allowed to function as an adhesive layer or a peeling prevention layer.

2. Production Method

2.1. Production Method for Optical Device having Periodic Metal Nanostructures

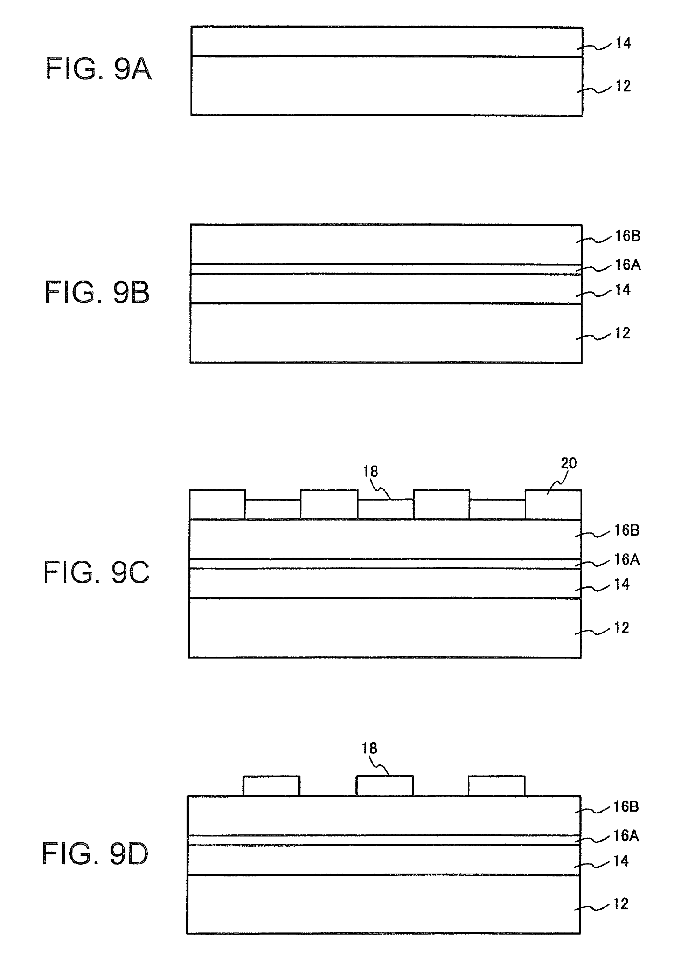

Figs. 9 (A) to 9 (D) show a process for producing the sensor chip shown in Fig. 8 (A). First, by a vacuum deposition method such as vapor deposition or sputtering, as shown in Fig. 9 (A), a metal layer 14 (for example, Ag or Au) is deposited to a thickness of about 150 nm on a quartz glass substrate 12. The thickness of the metal layer 14 is a thickness which does not allow a visible light serving as the excitation light to be transmitted through the metal layer, and secures the function as a mirror layer previously described with reference to Fig. 4.

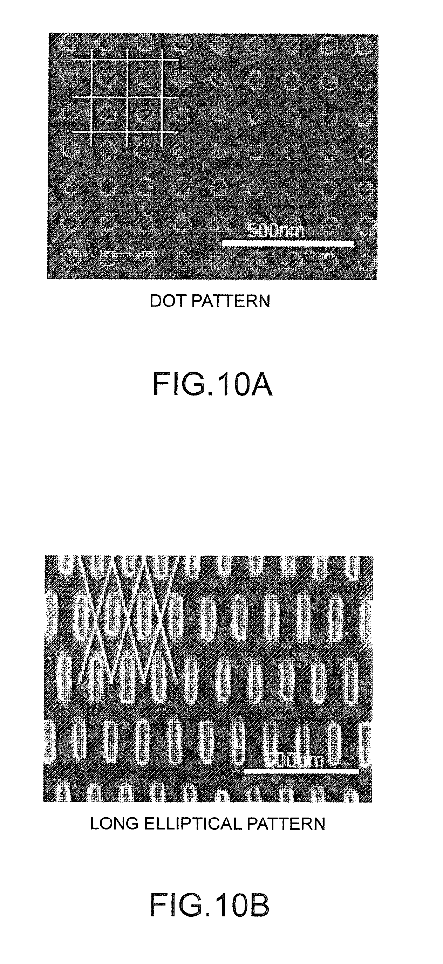

Subsequently, as shown in Fig. 9(B), a peeling prevention layer (for example, $Al_2O_3$) 16A having excellent thermal conductivity is formed to a thickness of about 5 nm on the surface of the metal layer 14 by sputtering. Subsequently, as shown in Fig. 9 (C), a $SiO_2$ layer 16B is formed to a thickness of 230 nm on the surface of the peeling prevention layer 16A by sputtering. Further, a resist pattern 20 is formed by imprinting or another method on the flat surface. Here, as the resist pattern 20, an example of a dot pattern is shown in Fig. 10 (A), and an example of an elliptical pattern is shown in Fig. 10(B).

Finally, as shown in Fig. 9(D), Ag 20 is deposited by vacuum vapor deposition on the resist pattern 20, and thereafter the resist pattern 20 is removed, whereby a two-dimensional periodic arrangement of Ag nanostructures 20 is formed.

2.2. Production Method for Optical Device having Metal Nanoislands

In place of the steps shown in Figs. 9(C) and 9(D), as shown in Fig. 11, Ag islands 30 are formed on the surface of the $SiO_2$ layer 16B by vacuum vapor deposition, whereby a random arrangement in which the particle diameter and the pitch of the Ag nanoparticles 18 are not uniform may be formed.

In the example shown in Fig. 11, the size of the Ag nanoparticles 31 in the Ag islands 30 is about 40 to 80 nm or so, the thickness of the $SiO_2$ layer 16B is 230 nm, and the thickness of the $Al_2O_3$ layer 16A is 5 nm.

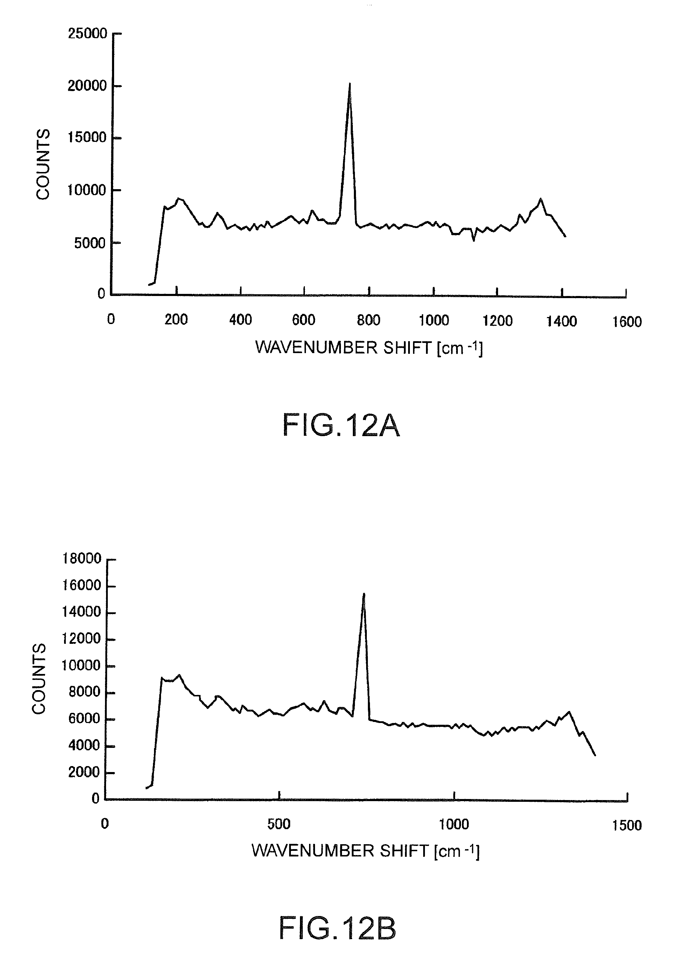

A Raman spectrum obtained by the structure in Fig. 11 is shown in Fig. 12(A). As the degree of signal enhancement corresponding to the counts shown in Fig. 12(A), $1.3 \times 10^8$ is obtained. For comparison, in Fig. 12(B), a Raman spectrum when the thickness of the $SiO_2$ layer 16B is 30 nm, which is the conventional technique, is shown. The degree of signal enhancement corresponding to the counts in Fig. 12(B) is $8.0 \times 10^7$. The enhanced electric field under the conditions of Fig. 12 (A) corresponds to the second peak, and the enhanced electric field under the conditions of Fig. 12(B) corresponds to the first peak. The degree of signal enhancement in Fig. 12(A) is 1.6 times larger than the degree of signal enhancement in Fig. 12(B), which is the conventional technique. This value also conforms to the computer simulation trend shown in Fig. 5(B).

3. Detection Apparatus

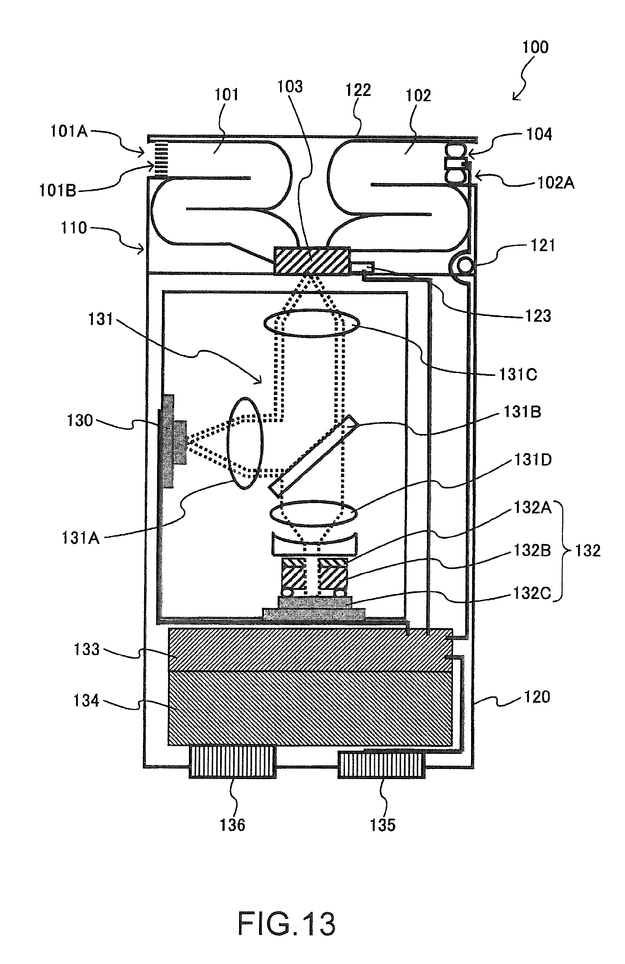

Next, the overall structure of a detection apparatus will be described. Fig. 13 shows an example of a specific structure of a detection apparatus of this embodiment. A detection apparatus 100 shown in Fig. 13 includes a sample supply channel 101 having a suction port 101A and a dust removal filter 101B, a sample discharge channel 102 having a discharge port 102A, and an optical device unit 110 provided with an optical device (sensor chip) 103 having a structure shown in Figs. 1(A) and 1(B), Fig. 8, or Fig. 11, and the like. On the optical device 103, a light is incident. A housing 120 of the detection apparatus 100 includes a sensor cover 122 which can be opened and closed by a hinge section 121. The optical device unit 110 is detachably mounted on the housing 120 in the sensor cover 122. The mounted/unmounted state of the optical device unit 110 can be detected by a sensor detector 123.

The sample supply channel 101 and the sample discharge channel 102 are each formed into a winding shape and therefore have a structure such that an outside light hardly enters.

Incidentally, a consideration is given to the shapes of the channels through which a fluid sample is sucked or discharged so that a light from outside does not enter the sensor and the fluid resistance to the fluid sample is decreased, respectively. By adopting a structure in which an outside light does not enter the optical device 103, a noise light other than a Raman scattered light does not enter, and thus the S/N ratio of a signal is improved. Also for the constituent material of the channel as well as the shape of the channel, it is necessary to select a material, a color, and a surface profile so that the light is hardly reflected. Further, by decreasing the fluid resistance to the fluid sample, a large amount of the fluid sample in the vicinity of this apparatus can be collected, and thus highly sensitive detection can be achieved. As the shape of the channel, by eliminating angular portions as much as possible and adopting a smooth shape, accumulation of the sample in an angular portion does not occur. It is also necessary to select a fan or a pump capable of producing a static pressure and an air flow rate appropriate to the channel resistance as a negative pressure generation section 103 provided in the fluid discharge channel 102.

In the housing 120, a light source 130, an optical system 131, a light detection section 132, a signal processing control section 133, and an electric power supply section 134 are provided.

In Fig. 13, the light source 130 is, for example, a laser, and from the viewpoint of reduction in size, it is preferred to use a vertical-cavity surface-emitting laser, but the light source is not limited thereto.

The light from the light source 130 is converted into a parallel light by a collimator lens 131A which constitutes the optical system 131. It is also possible to convert the parallel light into a linearly polarized light by providing a polarization control element downstream the collimator lens 131A. However, the polarization control element can be omitted as long as a light containing a linearly polarized light can be emitted by adopting, for example, a surface-emitting laser as the light source 130.

The light converted into the parallel light by the collimator lens 131A is guided toward the optical device 103 by a half mirror (dichroic mirror) 131B, and collected by an objective lens 131C, and then, incident on the optical device 103. A Rayleigh scattered light and a Raman scattered light from the optical device 103 pass through the objective lens 131C and are guided toward the light detection section 100 by the half mirror 131B.

The Rayleigh scattered light and the Raman scattered light from the optical device 103 are collected by a condenser lens 131D and input to the light detection section 132. In the light detection section 132, first, the lights arrive at a light filter 132A. By the light filter 32A (for example, a notch filter), the Raman scattered light is extracted. This Raman scattered light further passes through a spectroscope 132B and is then received by a light-receiving element 132C. The spectroscope 132B is formed from an etalon or the like utilizing, for example, Fabry-Perot resonance, and can make a pass wavelength band variable. The wavelength of the light passing through the spectroscope 132B can be controlled (selected) by the signal processing control circuit 133. By the light-receiving element 132C, a Raman spectrum specific to a target molecule 1 is obtained, and by collating the obtained Raman spectrum with previously held data, the target molecule 1 can be identified.

The electric power supply section 134 supplies electric power from a power supply connection section 135 to the light source 130, the light detection section 132, the signal processing control section 133, a fan 104, and the like. The electric power supply section 134 can be composed of, for example, a secondary battery, and may also be composed of a primary battery, an AC adapter, or the like. A communication connection section 136 is connected to the signal processing control section 133, and carries data, control signals, and the like to the signal processing control section 133.

In the example shown in Fig. 13, the signal processing control section 133 can send a command to the light detection section 132, the fan 104, and the like other than the light source 130 shown in Fig. 13. Further, the signal processing control section 1330 can perform a spectroscopic analysis using the Raman spectrum, and the signal processing control section 133 can identify the target molecule 1. Incidentally, the signal processing control section 133 can transmit the detection results obtained by the Raman scattered light, the spectroscopic analysis results obtained by the Raman spectrum, and the like to, for example, an external apparatus (not shown) connected to the communication connection section 136.

While the embodiments have been described in detail in the above description, it could be easily understood by those skilled in the art that various modifications can be made without departing in substance from the novel matter and effects of the invention. Therefore, such modifications all fall within the scope of the invention. For example, in the specification or the drawings, a term which is described at least once together with a different term having a broader meaning or the same meaning can be replaced with the different term in any parts of the specification or the drawings. Further, the structures and operations of the optical device, the detection apparatus, and so on are not limited to those described in the embodiments, and various modifications can be made.

[Reference Sings List]

10 optical device (sensor chip), 12 substrate, 14 metal layer, 16 dielectric layer, 16A first dielectric layer, 16B second dielectric layer, 18, 31 metal nanostructure, 20 resist pattern, 30 metal island, 100 detection apparatus, 130 light source, 132 light detector, d thickness of dielectric layer, P pitch (period) of metal nanostructures

Claims

1.   An optical device, comprising:

     a substrate;
     a metal layer formed on the substrate;
     a dielectric layer formed on the metal layer; and
     multiple metal nanostructures formed on the dielectric layer, wherein
     when the thickness of the dielectric layer is denoted by d and the polarizability of the metal nanostructures is denoted by $\alpha$, the following formulae are satisfied: $d > \alpha^{1/3}/2$ and $d > 40$ nm.

2.   The optical device according to claim 1, wherein the following formula is satisfied: $d > 100$ nm.

3.   The optical device according to claim 1 or 2, wherein
     when the excitation wavelength is denoted by $\lambda$, the complex permittivity of the dielectric layer is denoted by $\varepsilon 1$, and m denotes a natural number, the thickness d of the dielectric layer is substantially equivalent to $m\lambda/2\sqrt{\varepsilon 1}$.

4.   The optical device according to claim 3, wherein
     when the pitch between adjacent metal nanostructures among the multiple metal nanostructures is denoted by P, the length of the metal nanostructure in the pitch arrangement direction is denoted by 2r, the excitation wavelength is denoted by $\lambda$, the complex permittivity of the dielectric layer is denoted by $\varepsilon 1$, and the complex permittivity of the metal layer is denoted by $\varepsilon 2$, the following formula is satisfied: $2r < P < \lambda(\varepsilon 2+\varepsilon 1/\varepsilon 2)^{1/2}$.

5.   The optical device according to claim 4, wherein
     when a coefficient c is set to as follows: c > 1, the following formula is satisfied: $2r < P < \lambda(\varepsilon 2+\varepsilon 1/\varepsilon 2)^{1/2}/c$.

6.   The optical device according to claim 4 or 5, wherein
     the following formula is satisfied: $40$ nm $< P < 500$ nm.

7.   The optical device according to any one of claims 1 to 6, wherein
     the dielectric layer includes a first dielectric layer and a second dielectric layer, each formed from a different material.

8.   The optical device according to claim 7, wherein
     the first dielectric layer in contact with the metal layer is formed to have a thickness of 10 nm or less.

9.   An optical device, comprising:

     a substrate;
     a metal layer formed on the substrate;
     a dielectric layer formed on the metal layer; and
     multiple metal nanostructures formed on the dielectric layer, wherein
     when the thickness of the dielectric layer is denoted by d, the following formula is satisfied: $d > 100$ nm, and
     when the pitch between adjacent metal nanostructures among the multiple metal nanostructures is denoted by P, the length of the metal nanostructure in the pitch arrangement direction is denoted by 2r, the excitation wavelength is denoted by $\lambda$, the complex permittivity of the dielectric layer is denoted by $\varepsilon 1$, and the complex permittivity of the metal layer is denoted by $\varepsilon 2$, the following formula is satisfied: $2r < P < \lambda(\varepsilon 2+\varepsilon 1/\varepsilon 2)^{1/2}$.

10.  An optical device, comprising:

     a substrate;
     a metal layer formed on the substrate;
     a dielectric layer formed on the metal layer; and
     multiple metal nanostructures formed on the dielectric layer, wherein
     when the thickness of the dielectric layer is denoted by d, the following formula is satisfied: $d > 100$ nm, and
     when the pitch between adjacent metal nanostructures among the multiple metal nanostructures is denoted by P, the following formula is satisfied: $40$ nm $< P < 500$ nm.

11.  A detection apparatus, comprising:

a light source;
the optical device according to any one of claims 1 to 10, on which a light from the light source is incident; and
a light detector which detects a light emitted from the optical device.

FIG. 1A

FIG. 1B

FIG. 2

FIG. 3

FIG. 4

FIG. 5A

FIG. 5B

FIG. 6A

FIG. 6B

**FIG. 7A**

**FIG. 7B**

FIG. 8A

FIG. 8B

FIG. 9A

FIG. 9B

FIG. 9C

FIG. 9D

DOT PATTERN

FIG.10A

LONG ELLIPTICAL PATTERN

FIG.10B

31

Ag ISLANDS — 30

SiO$_2$ / Al$_2$O$_3$ — 16A/16B

Au LAYER — 14

SUBSTRATE — 12

FIG.11

FIG.12A

FIG.12B

FIG.13

## INTERNATIONAL SEARCH REPORT

| | International application No. |
|---|---|
| | PCT/JP2013/002851 |

**A. CLASSIFICATION OF SUBJECT MATTER**
*G01N21/65*(2006.01)i, *G01N21/27*(2006.01)i

According to International Patent Classification (IPC) or to both national classification and IPC

**B. FIELDS SEARCHED**

Minimum documentation searched (classification system followed by classification symbols)
G01N21/17-21/65

Documentation searched other than minimum documentation to the extent that such documents are included in the fields searched
| | | | | |
|---|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2009-115492 A (Canon Inc.),<br>28 May 2009 (28.05.2009),<br>paragraphs [0029] to [0037], [0045], [0081] to<br>[0111]; fig. 7 to 10<br>& US 2010/0233825 A1 & WO 2009/057804 A1 | 1-6,9-11<br>7,8 |
| Y | JP 2009-250951 A (Fujifilm Corp.),<br>29 October 2009 (29.10.2009),<br>paragraphs [0068] to [0074]; fig. 5<br>(Family: none) | 7,8 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 May, 2013 (27.05.13) | 04 June, 2013 (04.06.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/002851 |

**Box No. II       Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III       Observations where unity of invention is lacking (Continuation of item 3 of first sheet)**

This International Searching Authority found multiple inventions in this international application, as follows:
   The invention of claim 1 is same as the invention disclosed in JP 2009-115492 A, and therefore does not have a special technical feature. Consequently, two or more invention groups are set forth in claims.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007538264 T

**Non-patent literature cited in the description**

- *J. Phys. Soc. Jpn.,* 1983, vol. 52, 3853